# EUROPEAN PATENT SPECIFICATION

(11) **EP 3 552 800 B1**
(45) Date of publication and mention of the grant of the patent: **07.04.2021**
(21) Application number: 19168850.6
(22) Date of filing: 12.04.2019
(51) Int. Cl.: B29C 59/14

(54) **APPARATUS FOR TREATING MOVING ELONGATED ELEMENTS MADE OF PLASTIC MATERIAL**
VORRICHTUNG ZUR BEHANDLUNG SICH BEWEGENDER LÄNGLICHER ELEMENTE AUS KUNSTSTOFFMATERIAL
APPAREIL POUR LE TRAITEMENT DES ÉLÉMENTS ALLONGÉS EN MOVEMENT

(30) Priority: 13.04.2018 IT 201800004516
(43) Date of publication of application: 16.10.2019
(73) Proprietor: Geberit International AG, 8645 Jona (CH)
(72) Inventor: PRÜGL, Rainer, 45010 Villadose (RO) (IT); TENANI, Filippo, 45010 Villadose (RO) (IT)
(74) Representative: Cicconetti, Andrea

(56) References cited:
- EP-A1- 1 944 406
- WO-A1-2012/156178
- US-A- 5 403 453
- US-A- 6 101 973
- US-A1- 2008 190 559
- US-A1- 2011 020 549

## Description

The invention relates to apparatuses for performing surface treatments on plastic elements, and in particular it relates to an apparatus for treating external surfaces of elongated or endless elements made of plastic material and being moved, such as section bars, pipes, tapes, etcetera, for example moved by transport systems or exiting from extrusion stations, in order to make such surfaces suitable for a subsequent inkjet digital printing.

It is known the need to print on parts, components, elements made of plastic material, in particular for impressing data and information regarding production (date, batch, plant, ...), material composition, name of the manufacturing company, etcetera.

As surfaces made of some plastic materials, such as for example polyolefin plastics or PVC, have a low surface tension or wettability, the common inkjet digital printing cannot be used as the ink cannot adhere firmly and efficiently on such surfaces. Therefore, for printing processes on low tension and wettability plastic surfaces, only particular technologies can be used as silkscreen printing, flexography, offset printing and laser printing, which are however complex and expensive.

Alternatively, it is also known the use of the so-called hot stamping where data and information are printed on tapes that are later hot stamped on the surface of the plastic element. This solution too is however very complex and expensive.

The more cost-effective and flexible inkjet digital printing cannot in fact be used as the ink cannot firmly and efficiently adhere on the surfaces of the plastic material unless the latter are previously treated such as to increase the surface tension or wettability thereof.

To this end it is known the application of a primer or adhesion promoter i.e. a liquid substance forming a base cover that ensures the subsequent adhesion of the print ink. This solution is however expensive both because it requires a suitable device able to apply the primer and due to the cost of the latter, in particular in case of high production of plastic elements.

Alternatively, thermal treatments of the surfaces to be printed are used, that allow to temporarily change the characteristics of the plastic material increasing the surface tension thereof.

In flame treatments, the surface to be treated is submitted to heating by means of flames that remove possible impurities and organic contaminants (oils, fats, ...) and alter at the same time the structure of the plastic material, creating in particular an oxidised layer where existing oxygen radicals make it possible to subsequently fix the ink molecules. Similarly, in corona treatments an electrical charge generated by two electrodes affect the surface to be treated causing the oxidation of a thicker surface layer of the plastic material and polarization of polymer chains of the plastic material as well as the formation of oxygen radicals, thus enabling the ink to adhere. Flame and corona treatments can however slightly modify the aesthetical appearance of the surface treated.

In plasma treatments under atmospheric pressure, a gas or a gas mixture taken to the plasma physical state by means of electrical charges generated by high-frequency or high-tension electrical fields for forming the so-called plasma, affects the surface of the plastic element modifying its structure. As known, at the plasma state the greatest part of the gas atoms or molecules is ionized, that is broken down in positively charged ions and negatively charged electrons, highly reactive with the substance of the surface layers of the elements they come in contact with. In particular, in the case of plastic materials, ions and electrons cause the polarization of the molecules of the polymeric chains of the plastic material and/or the formation of radicals.

One disadvantage of the above described thermal treatments is that they can treat only limited surface portions and stationary elements i.e. not being moved. In the case of elements that are moved even at low speeds there is quite not enough time for an efficient treatment of the surface to be printed.

They are also known under-vacuum plasma treatments for elements made of plastic material in which plasma is generated inside specific chambers arranged under vacuum and in which plasma can expand to interact with the whole surface of the elements placed therein.

In this case too, only elements fully contained in the chamber under vacuum can be treated efficiently, as the transit of moving elongated or endless elements through the chamber causes problems of sealing i.e. loss of sealing inside the same, consequently jeopardizing the efficiency of the plasma on the material and/or of the surface treatment of the element due to the rubbing/interaction of the gaskets with the treated surface.

Document US 6101973 discloses a process and an apparatus to modify the slip characteristics of the surface of a polymeric flexible pipe. The apparatus comprises a pretreatment reaction chamber, containing a plurality of high frequency electrodes at least one of which is grounded and one first pipe positioned near the aforesaid electrodes and arranged to receive the flexible pipe. The apparatus also comprises a storage zone of a monomer, adjacent to the reaction chamber and where a plurality of respective high frequency electrodes is arranged, at least one of which is grounded. One second pipe is positioned near the electrodes, arranged to receive the flexible pipe exiting from the first pipe and connected to a supply source of the monomer to be applied to the surface of the flexible pipe.

One object of the present invention is to improve the known apparatuses to perform surface treatments on elements made of plastic material in order to make them suitable for a subsequent printing, particularly an inkjet digital printing.

Another object is to provide a treatment apparatus which makes it possible to treat the surface of moving elongated or endless elements, made of plastic material with low surface tension or wettability, such as polyolefin plastics and PVC, such as to make that surface suitable to be printed or marked efficiently and optimally, in particular with inkjet digital printers. One further object is to implement a compact and efficient treatment apparatus that makes it possible to perform a firm and efficient surface treatment for the subsequent inkjet printing on moving elongated or endless elements, such as section bars, pipes, tapes, etcetera, moved by transport means or exiting from extrusion stations.

These and other objects are obtained by an apparatus for treating surfaces of elements made of plastic material according to one or more of the claims reported in the following.

The invention will be better understood and implemented referring to the enclosed drawings showing some exemplary and non-limiting embodiments, wherein:
- Figure 1 is a schematic section of the apparatus of the invention for treating the surface of elongated or endless elements being moved;
- Figure 2 is a schematic view of the apparatus of the invention wherein some parts were removed to better highlight a thermoregulation system.

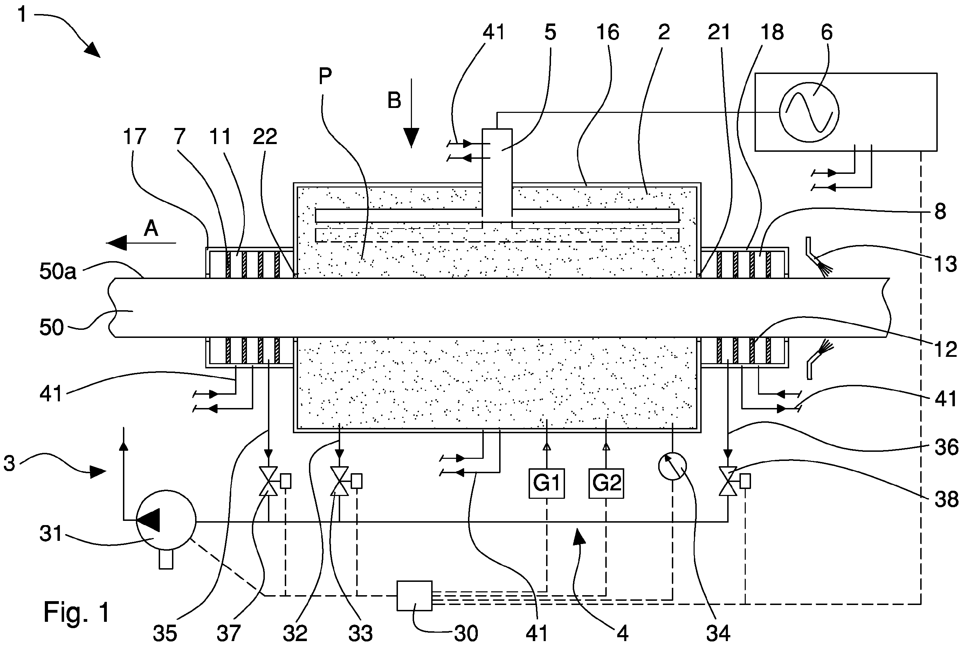

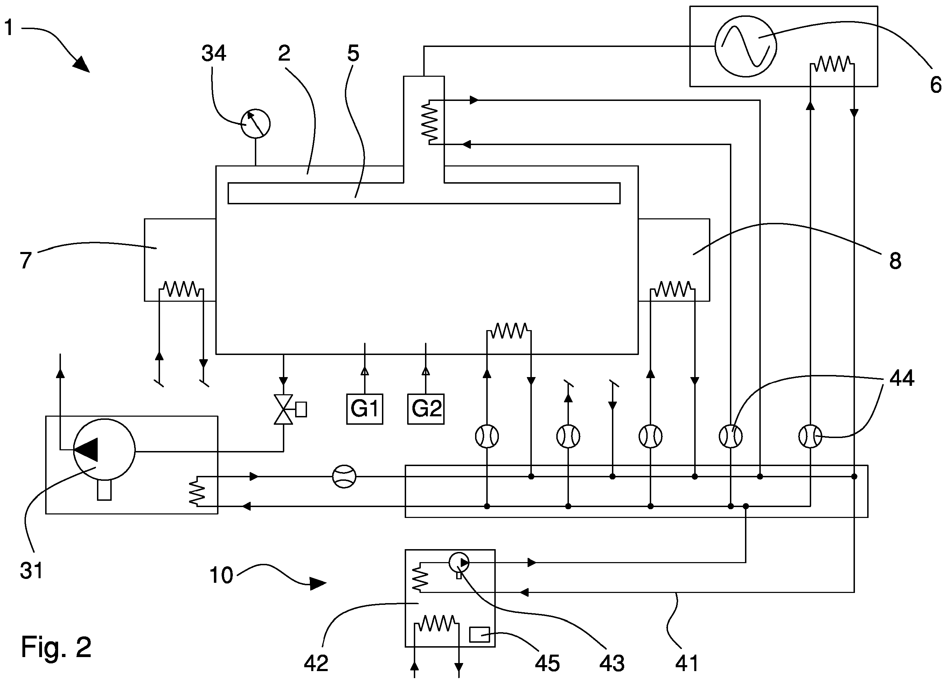

Referring to Figures 1 and 2, an apparatus 1 is shown for treating surfaces of elongated or endless elements made of plastic material moving along an advancing direction A, in particular section bars, tapes, pipes made of plastics with low surface tension or wettability, such as for example polyolefin plastics, PVC.

The treatment apparatus 1 comprises a treatment chamber 2 provided with an inlet opening 21 and an outlet opening 22 that are aligned along the advancing direction A to allow an elongated element 50 made of plastic material to move through the aforesaid treatment chamber 2. Suction means 3 are provided, connected to the treatment chamber 2 to create therein a definite first operating pressure Pa1 that is lower than atmospheric pressure, in particular between 4 Pa and 120 Pa, in particular between 20 Pa and 70 Pa, in particular 40 Pa.

The apparatus 1 also comprises inlet means 4 for inletting one or more gases G1, G2 inside the treatment chamber 2 and an emitter 5 placed inside the treatment chamber 2 and powered by a generator 6 to generate inside the treatment chamber 2 an electric field adapted to form with the introduced gas or gases G1, G2 a plasma P suitable for interacting with an external surface 50a of the elongated element 50, in particular polarizing the molecules of polymeric chains of the plastic material of the elongated element 50 and/or forming oxidizing radicals, so as to increase a surface tension Ts of the external surface 50a up to a defined minimum value Tsₘᵢₙ, in particular said minimum value Tsₘᵢₙ of said surface tension Ts being equal to 48 mN/m.

More specifically, the plasma P activation is the result of the ion bombing generated by molecules of ionised gas. The inelastic collisions between electrons and molecules of gas or gases create reactive species (excited atoms, free radicals, ions and electrons) that help break hydrogen bonds of the polymeric chains of the plastic material of the elongated element 50 to be treated and promote the intermolecular bond. Oxidization generated by free radicals creates an increase of polar groups on the external surface 50a, directly related to the properties of adhesion thereof, i.e. it increases the surface tension Ts and therefore the wettability of the aforesaid external surface 50a.

It is thus possible to apply a liquid ink to the external surface 50a by means of inkjet digital printing when exiting from the treatment chamber 2.

It is also possible to further increase the adhesion using particular inks that are sensitive to polarization of the external surface 50a.

Once the desired vacuum value i.e. the first operating pressure Pa1 lower than the atmospheric pressure is reached, the inlet apparatus 4 is for example able to introduce inside the treatment chamber 2 a first gas G1 and/or a second gas G2 according to definite percentages, in particular in a percentage comprised between 100 ppm and 1000 ppm. Gases G1, G2 entered into the treatment chamber 2 can comprise nitrogen, argon, helium, acetylene, oxygen, etcetera.

The treatment apparatus 1 further comprises one or more first sealing gaskets 11 and one or more second sealing gaskets 12 arranged at the outlet opening 22 and the inlet opening 21 respectively and shaped such as to abut, in particular with interference, the external surface 50a of the elongated element 50 and prevent air from entering into the treatment chamber 2. More precisely and referring to the embodiment shown in the figures, the apparatus 1 comprises a plurality of first sealing gaskets 11, arranged side by side and parallel inside a first passage chamber 7 connected to the outlet opening 22, and a plurality of second sealing gaskets 12 arranged side by side and parallel inside a second passage chamber 8 connected to the inlet opening 21.

At least the first sealing gaskets 11 are made of compact elastic polyurethane with hardness between 55 and 75 Shore A, in particular between 60 and 65 Shore A, such as not to interact with the external surface 50a and modify the surface tension Ts thereof obtained in the treatment chamber 2 even if said external surface 50a slides in contact with the sealing gaskets 11 during the movement of the elongated element 50.

Several tests carried out by the Applicant in fact proved that the sliding or rubbing of sealing gaskets made of another elastomeric material, such as for example nitrile, silicon, neoprene, ethylene-polypropylene rubber, etcetera, causes an alteration of the treatment of the external surface 50a, in particular a re-arrangement of hydrogen bonds of the polymeric chains of the plastic material of the elongated element and consequently a reduction of the surface tension Ts i.e. of the wettability of the external surface 50a to the original values, thus jeopardising the plasma P treatment carried out in the treatment chamber 2.

In case the elongated element 50 is a plastic pipe, in particular with circular section, the first sealing gaskets 11 and the second sealing gaskets 12 comprise respective pass-through openings, in particular circular-shaped, for the passage of the elongated element 50, provided with respective peripheral edges adapted to abut the external surface 50a of the elongated element 50. In particular, from the tests carried out on cylindrical pipes having a diameter between 50 mm and 160 mm, it was verified that the most efficient operation of the sealing gasket 11, 12 occurs with pass-through openings having an inner diameter lower than an outer diameter of the elongated element 50 by a defined quantity, in particular comprised between 15 mm and 25 mm, in particular equal to 20 mm.

Suction means 3 comprise at least a suction pump or vacuum pump 31 connected to the treatment chamber 2 by means of a first duct 32 with the interposition of a first valve 33. The vacuum pump 31 and the first valve 33 are connected and controlled by a control unit 30 so as to keep the pressure value constant (first operating pressure Pa1) inside the treatment chamber 2. To this end, it is provided a pressure sensor 34 adapted to measure the pressure inside the treatment chamber 2 and to send a relative signal to the control unit 30. The latter is also connected to the inlet means 4 so as to control the latter and adjust the inlet of the first gas G1 and/or of the second gas G2 in the treatment chamber 2 as a function of the pressure measured by the pressure sensor 34 and maintain the required concentration or percentage of gas during the treatment process.

In the illustrated embodiment, suction means 3 are also connected to the first passage chamber 7 and to the second passage chamber 8 to create therein a defined second operating pressure Pa2 that is lower than atmospheric pressure and in particular higher than the first operating pressure Pa1, in order to ease keeping said desired first operating pressure Pa2 inside the treatment chamber 2.

To this end the suction means 3 comprise a second duct 35 and one third duct 36 connecting the vacuum pump 31 to the first passage chamber 7 and to the second passage chamber 8 respectively. One second valve 37 and one third valve 38 are inserted respectively in the second duct 35 and in the third duct 36, interposed between the vacuum pump 31 and the respective passage chambers 7, 8 and connected and controlled by the control unit 30 so as to keep the pressure value constant (second operating pressure Pa2) inside the aforesaid passage chambers 7, 8.

The apparatus 1 according to the invention also comprises a temperature control system 10 arranged to adjust the temperature, in particular to cool, at least one among the emitter 5, the generator 6, wall means 16 of the treatment chamber 2, further wall means 17, 18 of the passage chambers 7, 8 and the suction means 3. The plasma P, generated inside the chamber 2 by the emitter 5, generates thermal energy during the operation which, if not conveniently extracted, will lead in a short time to overheat the apparatus 1 and its components.

For a higher thermal efficiency, the temperature control system 10 is of the fluid type and comprises a loop circuit 41 through which a coolant fluid flows, for example a liquid which is suitably cooled in one cooling unit 42 and pushed by a supply pump 43 thereof to the different devices to be cooled namely the emitter 5, the generator 6, the wall means 16 of the treatment chamber 2, the further wall means 17, 18 of the passage chambers 7, 8 and the suction means 3 so as to subtract heat therefrom.

The loop circuit 41 comprises a plurality of respective branches connected to the respective devices to be cooled and provided with corresponding flow regulators 44 of the coolant liquid.

The temperature control system 10 also comprises a control unit 45 and a plurality of temperature sensors, of the known type and not shown in the figures, which are able to detect the temperature of the devices to be cooled and send relative signals to the aforementioned control unit 45. Therefore, the latter is able to adjust the cooling of single devices acting on corresponding flow regulators 44 of the coolant fluid.

The emitter 5 comprises an anode and the generator 6 is of the radio frequency type, in particular operating at low frequency, between 40 kHz and 100 kHz and having a nominal power between 2 KW and 7 KW, in particular about 5 KW.

The generator 6 is able to detect through the emitter 5 the power actually emitted therefrom in the treatment chamber 2 and modify not only power but also frequency and waveform of the radiofrequency so as to ensure that the external surface 50a of the elongated element 50 is affected with the necessary power from plasma P during its transit through the treatment chamber 2.

In order to obtain an improved interaction between the plasma P and the external surface 50a of the elongated element 50, the emitter 5 is movable along a adjustment direction B that is transversal, in particular orthogonal, to the advancing direction A in order to adjust its distance from the aforesaid external surface 50a.

The length of the treatment chamber 2, i.e. the longitudinal dimension along the advancing direction A, is between 500 mm and 1000 mm, in particular equal to 600 mm and the movement speed of the tubular element 50 along the advancing direction A is between 5 m/min and 20 m/min, in particular equal to 10 m/min in order to ensure that each portion suitably remains inside the treatment chamber 2 allowing plasma P to act.

The apparatus 1 further includes nozzle means 13 placed at the inlet opening 21 and arranged to deliver one or more pressurized air jets on the external surface 50a of the elongated element 50, in particular to dry and/or clean the external surface 50a of the elongated element 50 from impurities. More precisely, if the elongated element 50is an endless element extruded by a suitable extrusion station and cooled with water in a cooling station placed upstream of the apparatus 1 of the invention, the air jets output by the nozzle means 13 make it possible to remove water and moisture present on the external surface 50a, which would hinder plasma P generation in case of vaporisation inside the treatment chamber 2 under vacuum. The vacuum created in the second chamber 8 too contributes to this end, in which chamber, to obtain the second operating pressure Pa2, also the remaining steam, in addition to water, present on the external surface 50a is sucked after the passage of air jets of the nozzle means 13.

In the operation of the treatment apparatus 1 of the invention it is provided an initial preparing step in which vacuum is created inside the treatment chamber 2 i.e. a first operating pressure P1a is obtained equal to about 40-60 Pa (absolute or real pressure) by means of the suction means 3. At the same time, also the passage chambers 7, 8 are depressurised with a second operating pressure Pa2 equal to about 50-95 KPa (absolute or real pressure). At this stage the inlet means 4 introduce the first gas G1 and/or the second gas G2 inside the treatment chamber 2 so as to obtain a concentration between 100 ppm and 1000 ppm, in particular of 500 ppm, at a first balance operating pressure Pa1 equal to about 40 Pa (absolute or real pressure).

It is thus possible to activate the generator 6 to generate by means of the emitter 5 an electric field that ionizes air and gas molecules present in the treatment chamber 2 leading to plasma formation P.

The elongated element 50 is therefore introduced with the predefined movement speed, between 5 m/min and 20 m/min and preferably equal to 10 m/min, in the treatment chamber 2 wherein the plasma P physically interacts with the external surface 50a, in particular polarising the molecules of the polymeric chains of the plastic material of the element such as to increase a surface tension Ts of the external surface 50a up until a defined minimum value Tsₘᵢₙ, equal to about 48 mN/m.

More specifically, by activating the plasma P, reactive species (excited atoms, free radicals, ions and electrons) are created inside the treatment chamber 2 that break hydrogen bonds of the plastic material polymeric chains on the external surface 50a of the elongated element 50, promoting the intermolecular bond, the oxidation generated by free radicals creating in particular an increase of polar groups on the external surface 50a, directly related to the adhesion properties thereof.

During the operation the control unit 30 controls the inlet of gas or gases G1, G2 into the treatment chamber 2 monitoring the pressure therein, which must be maintained substantially constant and equal to 40-60 Pa, by injecting the aforesaid gases in a controlled and constant way.

The sealing gaskets 11, 12 contribute to keep the treatment chamber 2 under vacuum and at substantially constant pressure, ensuring a correct generation and spreading of the plasma P inside the latter. Since the first sealing gaskets 11 are made of compact elastic polyurethane with hardness between 55 and 75 Shore A, in particular between 60 and 65 Shore A, they do not interact with the external surface 50a and they do not modify in any way its surface tension Ts equal or higher than 48 mN/m obtained in the treatment chamber 2.

Thereby an apparatus for ink digital printing can be provided downstream of the apparatus of the invention, being the ink able to adhere with no difficulty on the external surface 50a of the elongated element 50 treated in this way.

Thanks to the treatment apparatus 1 of the invention it is thus possible to treat the surface of moving elongated or endless elements made of plastic material with low surface tension or wettability, such as polyolefin plastics and PVC, so as to make such surface suitable to be printed or marked efficiently and optimally especially with inkjet digital printers, in particular modifying the surface tension thereof taking it to values equal or higher than 48 mN/m.

The apparatus 1 of the invention is compact and particularly efficient and allows to perform a stable and efficient under-vacuum plasma treatment on the external surface of elongated or endless elements made of plastic material, such as section bars, pipes, tapes, etcetera, moved by transport systems or exiting from extrusion stations, with a movement speed between 5 m/min and 20 m/min.

## Claims

1. Apparatus for treating surfaces of elongated or endless elements made of plastic material and moving along an advancing direction (A), comprising:
- a treatment chamber (2) provided with an inlet opening (21) and an outlet opening (22) that are aligned along said advancing direction (A) to allow an elongated element (50) made of plastic material to move through said treatment chamber (2);
- suction means (3) connected to said treatment chamber (2) to create therein a definite first operating pressure (Pal) that is lower than atmospheric pressure;
- inlet means (4) for inletting at least one gas (G1, G2) inside said treatment chamber (2);
- an emitter (5) placed inside said treatment chamber (2) and powered by a generator (6) in order to generate inside said treatment chamber (2) an electric field adapted to form with at least said gas (G1, G2) a plasma (P) able for interacting with an external surface (50a) of said elongated element (50), in particular polarizing molecules of polymeric chains of said plastic material and/or forming oxidizing radicals, so as to increase a surface tension (Ts) of said external surface (50a) up to a defined minimum value (Tsₘᵢₙ);
- at least one first sealing gasket (11) and at least one second sealing gasket (12) arranged at said outlet opening (22) and said inlet opening (21) respectively and shaped such as to abut, in particular with interference, said external surface (50a) of said elongated element (50) in order to prevent air from entering into said treatment chamber (2), said at least one first sealing gasket (11) being made of compact elastic polyurethane with hardness between 55 and 75 Shore A, in particular between 60 and 65 Shore configured to not interact and modify the surface tension (Ts) of said external surface (50a) obtained in said treatment chamber (2).

2. Apparatus according to claim 1, comprising a plurality of first sealing gaskets (11) arranged side by side and parallel inside a first passage chamber (7) connected to said outlet opening (22).

3. Apparatus according to claim 1 or 2, comprising a plurality of second sealing gaskets (12) arranged side by side and parallel inside a second passage chamber (8) connected to said inlet opening (21).

4. Apparatus according to claim 2 and 3, wherein said suction means (3) are connected to said first passage chamber (7) and to said second passage chamber (8) to create within said passage chambers a defined second operating pressure (Pa2) that is lower than atmospheric pressure, in particular higher than said first operating pressure (Pa1).

5. Apparatus according to any preceding claim, comprising a temperature control system (10) for cooling at least one among said emitter (5), generator (6), suction means (3), wall means (16) of said treatment chamber (2) and further wall means (17, 18) of passage chambers (7, 8) connected to said outlet opening (22) and inlet opening (21).

6. Apparatus according to any preceding claim, wherein said emitter (5) comprises an anode and said generator (6) is of the radio frequency type, in particular operating at low frequency, between 40 kHz and 100 kHz.

7. Apparatus according to any preceding claim, wherein said emitter (5) is movable along an adjustment direction (B) that is transversal, in particular orthogonal, to said advancing direction (A) in order to adjust a distance of said emitter (5) from said external surface (50a) of said elongated element (50).

8. Apparatus according to any preceding claim, comprising nozzle means (13) positioned at said inlet opening (21) and arranged to deliver at least one pressurized air jet on said external surface (50a) of said elongated element (50), in particular for drying and/or cleaning said external surface (50a) of said elongated element (50).

9. Apparatus according to any preceding claim, wherein said first operating pressure (Pal) is between 4 Pa and 120 Pa, in particular between 20 Pa and 70 Pa, in particular equal to about 40 Pa.

10. Apparatus according to any preceding claim, wherein said minimum value (Tsₘᵢₙ) of said surface tension (Ts) is equal to 48 mN/m.

11. Apparatus according to any preceding claim, wherein said elongated element (50) is a pipe and said first sealing gasket (11) and second sealing gasket (12) comprise respective through openings with circular shape that allow said elongated element (50) passing through, provided with peripheral edges adapted to abut said external surface (50a) of said elongated element (50), said pass-through openings having an inner diameter that is smaller than an outer diameter of said elongated element (50) by a defined quantity, in particular comprised between 15 mm and 25 mm, in particular equal to about 20 mm for values of said outer diameter of said elongated element (50) comprised between 50 mm and 160 mm.

## Patentansprüche

1. Vorrichtung zum Behandeln von Oberflächen von länglichen oder Endloselementen, die aus Plastikmaterial hergestellt sind und sich entlang einer Vorschubrichtung (A) bewegen, umfassend:
- eine Behandlungskammer (2), die mit einer Einlassöffnung (21) und einer Auslassöffnung (22) versehen ist, die entlang der Vorschubrichtung (A) ausgerichtet sind, um einem länglichen Element (50), das aus Plastikmaterial hergestellt ist, zu ermöglichen, sich durch die Behandlungskammer (2) zu bewegen;
- Ansaugmittel (3), die mit der Behandlungskammer (2) verbunden sind, um darin einen definitiven ersten Betriebsdruck (Pal) zu erzeugen, der niedriger ist als atmosphärischer Druck;
- Einlassmittel (4) zum Einlassen zumindest eines Gases (G1, G2) ins Innere der Behandlungskammer (2);
- einen Emitter (5), der im Inneren der Behandlungskammer (2) platziert ist und von einem Generator (6) versorgt wird, um im Inneren der Behandlungskammer (2) ein elektrisches Feld erzeugen, das ausgebildet ist, mit zumindest dem Gas (G1, G2) eine Plasma (P) zu bilden, das in der Lage ist, mit einer äußeren Oberfläche (50a) des länglichen Elements (50) zu Interagieren, insbesondere Moleküle von Polymerketten des Plastikmaterials zu polarisieren und/oder oxidierende Radikale zu bilden, um eine Oberflächenspannung (Ts) der äußeren Oberfläche (50a) bis zu einem definierten Minimalwert (Tsₘᵢₙ) zu erhöhen;
- zumindest eine erste Abdichtung (11) und zumindest eine zweite Abdichtung (12), die jeweils an der Auslassöffnung (22) und der Einlassöffnung (21) angeordnet und derart geformt sind, um, insbesondere mit Eingriff, an die äußere Oberfläche (50a) des länglichen Elements (50) anzugrenzen, um zu verhindern, dass Luft in die Behandlungskammer (2) eintritt, wobei die zumindest eine erste Abdichtung (11) aus kompaktem elastischen Polyurethan mit einer Härte zwischen 55 und 75 Shore A, insbesondere zwischen 60 and 65 Shore A, hergestellt ist, das konfiguriert ist, nicht mit der Oberflächenspannung (Ts) der äußeren Oberfläche (50a), die in der Behandlungskammer (2) erreicht wird, zu interagieren und diese zu modifizieren.

2. Vorrichtung gemäß Anspruch 1, umfassend eine Mehrzahl von ersten Abdichtungen (11), die nebeneinander und parallel zueinander im Inneren einer ersten Durchlasskammer (7), die mit der Auslassöffnung (22) verbunden ist, angeordnet sind.

3. Vorrichtung gemäß Anspruch 1 oder 2, umfassend eine Mehrzahl von zweiten Abdichtungen (12), die nebeneinander und parallel zueinander im Inneren einer zweiten Durchlasskammer (8), die mit der Einlassöffnung (21) verbunden ist, angeordnet sind.

4. Vorrichtung gemäß Anspruch 2 und 3, wobei die Ansaugmittel (3) mit der ersten Durchlasskammer (7) und mit der zweiten Durchlasskammer (8) verbunden sind, um innerhalb der Durchlasskammern einen definiertem zweiten Betriebsdruck (Pa2), der niedriger ist als atmosphärischer Druck, insbesondere höher als der erste Betriebsdruck (Pal) zu erzeugen.

5. Vorrichtung gemäß jedem vorhergehenden Anspruch, umfassend ein Temperatursteuersystem (10) zum Kühlen zumindest einem von dem Emitter (5), Generator (6), Ansaugmittel (3), Wandmittel (16) der Behandlungskammer (2) und weiter Wandmittel (17, 18) von Durchlasskammern (7, 8), die mit der Auslassöffnung (22) und Einlassöffnung (21) verbunden sind.

6. Vorrichtung gemäß jedem vorhergehenden Anspruch, wobei der Emitter (5) eine Anode umfasst und der Generator (6) vom Radiofrequenztyp ist, der insbesondere mit einer niedrigen Frequent zwischen 40 kHz und 100 kHz betrieben wird.

7. Vorrichtung gemäß jedem vorhergehenden Anspruch, wobei der Emitter (5) entlang einer Anpassungsrichtung (B) bewegbar ist, die transversal, insbesondere orthogonal, zu der Vorschubrichtung (A) ist, um einen Abstand des Emitters (5) von der äußeren Oberfläche (50a) des länglichen Elements (50) anzupassen.

8. Vorrichtung gemäß jedem vorhergehenden Anspruch, umfassend Düsenmittel (13), die an der Einlassöffnung (21) positioniert und angeordnet sind, um zumindest einen Druckluftstrahl auf die äußere Oberfläche (50a) des länglichen Elements (50) zu liefern, insbesondere zum Trocknen und/oder Reinigen der äußeren Oberfläche (50a) des länglichen Elements (50).

9. Vorrichtung gemäß jedem vorhergehenden Anspruch, wobei der erste Betriebsdruck (Pal) zwischen 4 Pa und 120 Pa liegt, insbesondere zwischen 20 Pa und 70 Pa, insbesondere gleich ungefähr 40 Pa.

10. Vorrichtung gemäß jedem vorhergehenden Anspruch, wobei der Minimalwert (Tsₘᵢₙ) der Oberflächenspannung (Ts) gleich 48 mN/m ist.

11. Vorrichtung gemäß jedem vorhergehenden Anspruch, wobei das längliche Element (50) ein Rohr ist und die erste Abdichtung (11) und zweite Abdichtung (12) jeweilige Durchgangsöffnungen mit einer kreisförmigen Form umfassen, die dem länglichen Element (50) ermöglichen, durchgelassen zu werden, die mit periphären Kanten versehen sind, die ausgebildet sind, um an die äußere Oberfläche (50a) des länglichen Elements (50) anzugrenzen, wobei die Durchgangsöffnungen einen inneren Durchmesser aufweisen, der um eine definierte Menge kleiner ist, als ein äußerer Durchmesser des länglichen Elements (50), insbesondere umfassend zwischen 15 mm und 25 mm, insbesondere gleich ungefähr 20 mm für Werte des äußeren Durchmessers des länglichen Element (50) umfassend zwischen 50 mm und 160 mm.

## Revendications

1. Appareil pour le traitement de surfaces d'éléments allongés ou sans fin réalisés en matière plastique et se déplaçant le long d'une direction d'avance (A), comprenant :
- une chambre de traitement (2) dotée d'une ouverture d'entrée (21) et d'une ouverture de sortie (22) qui sont alignées le long de ladite direction d'avance (A) pour permettre à un élément allongé (50) réalisé en matière plastique de se déplacer à travers ladite chambre de traitement (2) ;
- des moyens d'aspiration (3) raccordés à ladite chambre de traitement (2) pour créer dans celle-ci une première pression opérationnelle (Pal) définie qui est inférieure à la pression atmosphérique ;
- des moyens d'entrée (4) pour l'entrée d'au moins un gaz (G1, G2) à l'intérieur de ladite chambre de traitement (2) ;
- un émetteur (5) placé à l'intérieur de ladite chambre de traitement (2) et actionné par un générateur (6) afin de générer à l'intérieur de ladite chambre de traitement (2) un champ électrique adapté pour former avec au moins ledit gaz (G1, G2) un plasma (P) apte à interagir avec une surface externe (50a) dudit élément allongé (50), en particulier polariser des molécules de chaînes polymériques de ladite matière plastique et/ou former des radicaux d'oxydation de sorte à augmenter une tension de surface (Ts) de ladite surface externe (50a) jusqu'à une valeur minimum (Tsₘᵢₙ) définie ;
- au moins un premier joint étanche (11) et au moins un second joint étanche (12) agencés au niveau de ladite ouverture de sortie (22) et de ladite ouverture d'entrée (21) respectivement et formés de sorte à buter, en particulier avec interférence, contre ladite surface externe (50a) dudit élément allongé (50) afin d'empêcher de l'air d'entrer dans ladite chambre de traitement (2), ledit au moins un premier joint étanche (11) étant réalisé en polyuréthane élastique compact avec une dureté entre 55 et 75 Shore A, en particulier entre 60 et 65 Shore A, configuré pour ne pas interagir et modifier la tension de surface (Ts) de ladite surface externe (50a) obtenue dans ladite chambre de traitement (2).

2. Appareil selon la revendication 1, comprenant une pluralité de premiers joints étanches (11) agencés côte à côte et parallèlement à l'intérieur d'une première chambre de passage (7) raccordée à ladite ouverture de sortie (22).

3. Appareil selon la revendication 1 ou 2, comprenant une pluralité de seconds joints étanches (12) agencés côte à côte et parallèlement à l'intérieur d'une seconde chambre de passage (8) raccordée à ladite ouverture d'entrée (21).

4. Appareil selon les revendications 2 et 3, dans lequel lesdits moyens d'aspiration (3) sont raccordés à ladite première chambre de passage (7) et à ladite seconde chambre de passage (8) pour créer dans lesdites chambres de passage une seconde pression opérationnelle (Pa2) définie qui est inférieure à la pression atmosphérique, en particulier supérieure à ladite première pression opérationnelle (Pa1).

5. Appareil selon l'une quelconque des revendications précédentes, comprenant un système de commande de température (10) pour le refroidissement d'au moins un parmi ledit émetteur (5), ledit générateur (6), lesdits moyens d'aspiration (3), lesdits moyens de paroi (16) de ladite chambre de traitement (2) et d'autres moyens de paroi (17, 18) de chambres de passage (7, 8) raccordées à ladite ouverture de sortie (22) et ladite ouverture d'entrée (21).

6. Appareil selon l'une quelconque des revendications précédentes, dans lequel ledit émetteur (5) comprend une anode et ledit générateur (6) est du type à radiofréquence, en particulier fonctionnant à basse fréquence, entre 40 kHz et 100 kHz.

7. Appareil selon l'une quelconque des revendications précédentes, dans lequel ledit émetteur (5) est mobile le long d'une direction d'ajustement (B) qui est transversale, en particulier orthogonale, à ladite direction d'avance (A) afin d'ajuster une distance dudit émetteur (5) de ladite surface externe (50a) dudit élément allongé (50).

8. Appareil selon l'une quelconque des revendications précédentes, comprenant des moyens de buse (13) positionnés au niveau de ladite ouverture d'entrée (21) et agencés pour fournir au moins un jet d'air pressurisé sur ladite surface externe (50a) dudit élément allongé (50), en particulier pour le séchage et/ou le nettoyage de ladite surface externe (50a) dudit élément allongé (50).

9. Appareil selon l'une quelconque des revendications précédentes, dans lequel ladite première pression opérationnelle (Pal) est entre 4 Pa et 120 Pa, en particulier entre 20 Pa et 70 Pa, en particulier est égale à environ 40 Pa.

10. Appareil selon l'une quelconque des revendications précédentes, dans lequel ladite valeur minimum (TSₘᵢₙ) de ladite tension de surface (Ts) est égale à 48 mN/m.

11. Appareil selon l'une quelconque des revendications précédentes, dans lequel ledit élément allongé (50) est un tuyau et ledit premier joint étanche (11) et ledit second joint étanche (12) comprennent des ouvertures débouchantes respectives avec une forme circulaire qui permettent audit élément allongé (50) de passer au travers, dotées de bords périphériques adaptés pour buter contre ladite surface externe (50a) dudit élément allongé (50), lesdites ouvertures débouchantes présentant un diamètre intérieur qui est inférieur à un diamètre extérieur dudit élément allongé (50) d'une quantité définie, en particulier comprise entre 15 mm et 25 mm, en particulier égale à environ 20 mm pour des valeurs dudit diamètre extérieur dudit élément allongé (50) comprises entre 50 mm et 160 mm.
